Europäisches Patentamt

(19) European Patent Office   (11) Numéro de publication: **0 084 473**

Office européen des brevets   **B1**

(12) **FASCICULE DE BREVET EUROPÉEN**

(45) Date de publication du fascicule du brevet:
**13.08.86**

(21) Numéro de dépôt: **83400032.5**

(22) Date de dépôt: **06.01.83**

(51) Int. Cl.⁴: **G 05 G 5/02**

(54) Dispositif de commande de boîte de vitesses automatique de véhicule automobile.

(30) Priorité: **06.01.82 FR 8200108**

(43) Date de publication de la demande:
**27.07.83 Bulletin 83/30**

(45) Mention de la délivrance du brevet:
**13.08.86 Bulletin 86/33**

(84) Etats contractants désignés:
**BE DE GB IT NL SE**

(56) Documents cité:
**DE-A-2 939 035**
**FR-A-2 040 437**
**FR-A-2 437 316**
**GB-A-2 017 838**

(73) Titulaire: **REGIE NATIONALE DES USINES RENAULT, Boîte postale 103 8-10 avenue Emile Zola, F-92109 Boulogne- Billancourt (FR)**

(72) Inventeur: **Lamy, Jean- Michel, 9, Villa Brune, F-75014 Paris (FR)**
Inventeur: **Jacquet, Joel, 57, rue Henri Barbusse, F-92000 Nanterre (FR)**

(74) Mandataire: **Chassagnon, Jean- Alain, REGIE NATIONALE DES USINES RENAULT (S.0804), F-92109 Boulogne- Billancourt Cedex (FR)**

LIBER, STOCKHOLM 1986

## Description

La présente invention se rapporte à un dispositif de commande de boîte de vitesse automatique de véhicule automobile, comprenant un levier de commande monté de manière à pouvoir pivoter dans un plan sur le véhicule, par exemple sur le plancher de ce dernier, des moyens d'encliquetage élastique pour définir plusieurs positions de pivotement dudit levier, correspondant aux différentes positions de sélection de la boîte de vitesses, des moyens d'interdiction empêchant le pivotement non intentionnel dudit levier dans certaines desdites positions, et des moyens de suppression intentionnelle de l'action d'interdiction, commandés depuis la poignée de manoeuvre dudit levier à l'encontre de l'action d'un ressort de rappel.

Il existe des dispositifs de commande de boite de vitesses automatiques dort l'architecture est basée sur celle des freins à main du type à levier pivotant. Ces commandes, dont un exemple est représenté par le document GB—A—2.017.838 présente un secteur cranté sur lequel un doigt vient se bloquer, faisant verrou. Un autre type de ces commandes est représenté par le document FR—A—2.437.316 où le secteur dentée est interne. Les commandes de boîte de vitesses automatique du type frein à main impliquent un mécanisme complexe composé d'un grande nombre de pièces (poussoirs, renvois, axes, ressorts).

D'autres dispositifs de commande de boîte de vitessés automatique comprennent une interdiction par un ergot latéral solidaire d'un tube coulissant sur le levier proprement dit. Les moyens d'enclinquetage élastique sont placés latéralement, ce qui fait qu'il est difficile de les intégrer dans la commande. De plus, l'ensemble est lourd car il doit être renforcé pour pouvoir supporter les efforts de torsion dus à l'interdiction latérale (efforts en cas de manoeuvre brusque, par exemple).

La présente invention a pour objet un dispositif de commande de boîte de vitesse automatique de structure simple, compacte et légère.

L'invention a également pour objet un dispositif de commande de boîte de vitesses automatique qui, moyennant des modifications, minimales, peut être monté sur de nombreux véhicules différents.

Le dispositif de commande de boîte de vitesses automatique de véhicule automobile conforme à l'invention comprend un levier de commande monté de manière à pouvoir pivoter dans un plan sur le véhicule, par exemple sur le plancher de ce dernier. Ce dispositif comprend, en outre, des moyens d'encliquetage élastique pour définir plusieurs positions de pivotement du levier, correspondant aux différentes positions de sélection de la boîte de vitesses. Le dispositif comprend, par ailleurs, des moyens d'interdiction empêchant le pivotement non intentionnel dudit levier dans certaines des dispositions, et des moyens de suppression intentionnelle de l'action d'interdiction, commandés depuis la poignée de manoeuvre dudit levier à l'encontre de l'action d'un ressort de rappel. Le levier est monté pivotant sur un secteur d'interdiction et d'encliquetage fixé au véhicule et portant sur sa périphérie des crans d'interdiction et, sur ses deux côtés opposés, des crans d'encliquetage. Le levier présente une tige intérieure montée coulissante suivant l'axe du levier de manière que l'extrémité libre de ladite tige se trouve en prise avec lesdits crans d'interdiction du secteur sous l'action d'un ressort et puisse être amenée hors de prise d'avec lesdits crans, à l'encontre de l'action du ressort, au moyen d'une gâchette associée à la manette de manoeuvre du levier. Le levier porte deux éléments d'encliquetage élastiques disposés de parte et d'autre dudit secteur et agissant depuis deux côtés opposés sur les crans d'encliquetage dudit secteur.

Grâce à cet agencement, la tige de verrouillage agit directement, en position centrale, sur le secteur cranté et l'action des deux éléments d'enliquetage est symétique et équilibrée.

De préférence, le levier de commande présente une forme tubulaire au-dessus du secteur cranté et est divisé, à la hauteur dudit secteur, en deux branches dont chacune est située d'un côté dudit secteur. Dans ce cas, chacun des deux éléments d'encliquetage peut être monté sur l'une desdites branches du levier.

Lesdits éléments d'encliquetage comprennent avantageusement chacun une bille sollicitée par un ressort pour coopérer avec les crans d'encliquetage du secteur. De préférence, chaque bille est montée, avec son ressort, dans une capsule susceptible d'être fixée en tant que telle sur le levier, par exemple par clipsage dans un trou d'une des deux branches du levier.

En se référant au dessin annexé, on va décrire ci-après plus en détail un mode de réalisation illustratif et non limitatif de l'objet de l'invention; sur le dessin:

la figure 1 est une vue éclatée en élévation frontale d'un dispositif de commande de boîte de vitesses automatique de véhicule automobile;

la figure 2 est une vue en élévation latérale de ce même dispositif, sans les moyens de fixation du dispositif au véhicule.

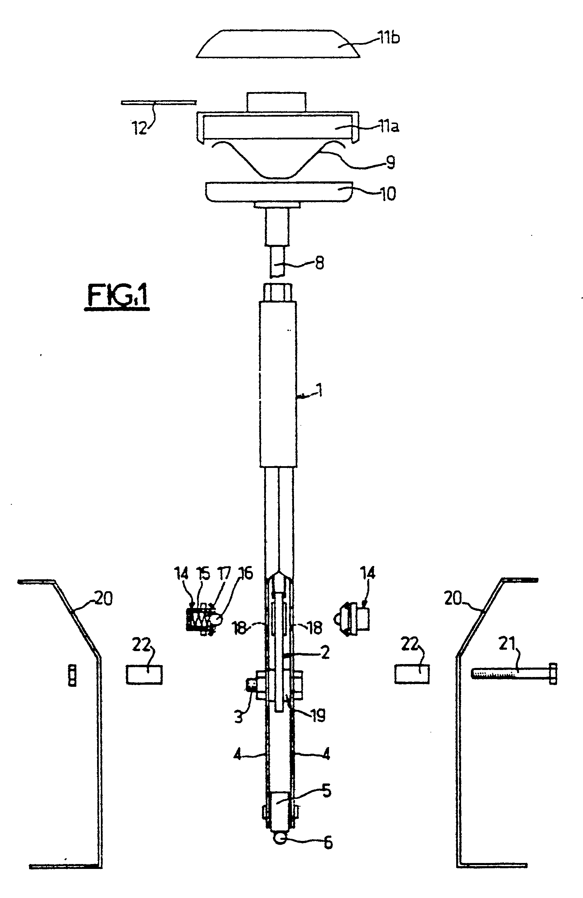

Le dispositif de commande de boîte de vitesses automatique pour véhicule automobile selon la figure 1, comprend deux sous-ensembles, à savoir un sous-ensemble de commande et un sous-ensemble de support pour le sous-ensemble de commande.

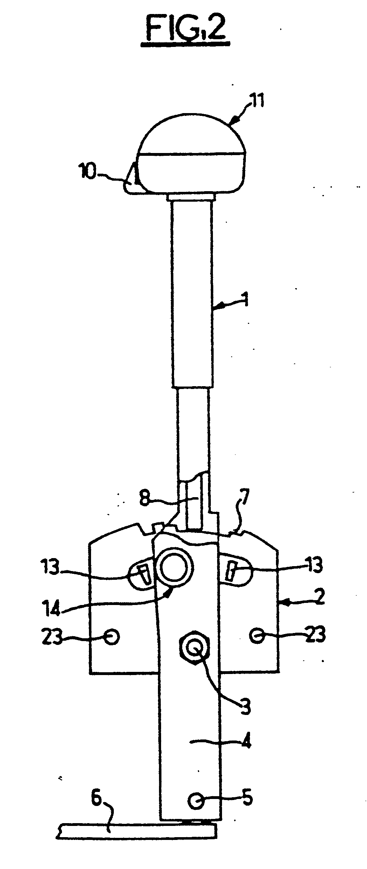

Le sous-ensemble de commande qui est illustré sans le sous-ensemble de support sur la figure 2 comprend un levieur de commande 1 et un secteur d'interdiction et d'encliquetage 2.

Le levier est monté pivotant autour d'un axe transversal 3 sur le secteur 2. A cet effet, le levier 1 qui présente une section tubulaire dans sa partie située au-dessus du secteur 2 est divisé, à la hauteur du secteur 2, en deux branches 4 s'étendant sur les deux côté opposés du secteur 2. A son extrémité inférieure située en dessous du secteur 2, le levier 1 est relié par une articulation 5 à un câble ou une tige 6 de commande de la boîte de vitesses automatique.

Le secteur 2 présente, à sa partie supérieure, des crans 7 d'interdiction ménagés dans sa périphérie. Ces crans constituent, de façon connue en soi, en combinaison avec un élément d'interdiction déverrouillable lié au levier de commande 1, un système d'interdiction empêchant le passage non intentionnel du levier 1 dans certaines positions de sélection de la boîte de vitesses automatique. En l'occurrence, lesdits crans 7 doivent empêcher le passage non intentionnel aux positions de marche arrière, de point mort avec blocage de la transmission ainsi qu'éventuellement à une ou plusieurs positions correspondant à un automatisme limité à un nombre réduit de rapports en marche avant.

Cet élément d'interdiction déverrouillable coopérant avec les crans 7 est constitué par une tige 8 qui est mobile en translation axiale à l'intérieur de la partie supérieure tubulaire du levier 1. L'extrémité inférieure de la tige 8 est maintenue en prise avec les crans 7 du secteur 2 par un ressort 9. Ce dernier est intercalé entre une gâchette 10 solidaire de l'extrémité supérieure de la tige 8 et la poignée de manoeuvre 11 du levier 1. On reconnaît sur la figure 1 que la poignée 11 se compose d'une coquille inférieure 11a qui est fixée à l'aide d'une goupille transversale 12 sur l'extrémité supérieure du levier 1, le ressort 9 étant intercalé entre cette coquille 11a et la gâchette 10, et d'une coquille supérieure 11b fixée par clipsage sur la coquille 11a. La gâchette 10 est disposée, par rapport à la poignée 11, de manière à se trouver à portée des doigts de la main du conducteur, saisissant la poignée 11 en vue de la sélection de la position de la boîte de vitesses automatique.

Afin de définir avec précision les différentes positions de sélection de la boîte de vitesses automatique et de permettre au conducteur de "sentir" ces différentes positions de sélection, un système d'encliquetage élastique dit "de billage" est prévu entre le levier 1 et le secteur 2. A cet effet, le secteur 2 présente, sur chacun de ses deux côtés plats opposés, un nombre de crans 13 correspondant au nombre de positions de sélection. De son côté, le levier 1 porte, sur chacune des deux branches 4 de sa partie inférieure, en face desdits crans d'encliquetage du secteur 2, les capsules 14 à bille d'encliquetage comprenant, à l'intérieur d'une capsule 15, une bille 16 et un ressort 17 intercalés entre la bille 16 et le fond de la capsule 15. Cette dernière comporte des moyens pour sa fixation par clipsage dans un trou 18 de chaque branche 4 du levieur 1, dans une position telle que la bille 16 coopère, sous l'action du ressort 17, avec les crans 13 de la face correspondante du secteur 2.

Le secteur 2 peut être réalisé de diverses manières.

Il est ainsi possible de mouler le secteur 2 de préférence en matière plastique, directement avec les crans d'interdiction 7, les crans d'encliquetage 13 et, de préférence, une douille-entretoise 19 recevant l'axe d'articulation 3 du levier 1, par exemple un boulon.

Par ailleurs, il est également possible de réaliser le secteur 2 en tôle, les crans d'interdiction 7 étant découpés dans la tôle. Ces crans d'interdiction 7 pourraient également être surmoulés en matière plastique sur la tôle, de la même manière que les crans d'encliquetage 13 du plutôt, les parties situées entre les crans d'encliquetage 13. La douille-entretoise 19 pour l'axe d'articulation 3 du levier 1 peut, dans ce cas, être également surmoulée en matière plastique sur l'axe de pôle, ou se présenter, par exemple, sous la forme de deux douille-entretoises séparées.

Le sous-ensemble de support du sous-ensemble de commande décrit ci-dessus peut comprendre, comme représenté sur la figure 1, par exemple deux flasques 20 en tôle ou en une autre matière, ces flasques 20 disposées de parte et d'autre du sous-ensemble de commande permettant de monter ce dernier par exemple sur le plancher non représenté d'un véhicule. Pour pouvoir utiliser le même sous-ensemble de commande sur des véhicules différents il suffit ainsi de monter, à chaque fois, un sous-ensemble de support adapté à l'architecture du véhicule en question, et d'y fixer le sous-ensemble de commande qui reste inchangé.

Dans l'exemple représenté, le montage du sous-ensemble de commande sur le sous-ensemble du support s'effectue par serrage du secteur 2 entre les deux flasques 20, à l'aide de deux boulons 21 et d'entretoises 22 intercalés entre le secteur 2 et chaque flasque 20. Sur la figure 2, on reconnaît que le secteur 20 présente, pour le passage des boulons 21, deux trous 23 situés l'un en avant et l'autre en arrière de l'axe d'articulation 3 du levier 1 sur le secteur 2.

## Revendications

1. Dispositif de commande de boîte de vitesses automatique de véhicule automobile, comprenant un levier de commande (1) monté de manière à pouvoir pivoter dans un plan sur le véhicule, par exemple sur le plancher de ce dernier, des moyens d'encliquetage élastique (13) pour définir plusieurs positions de pivotement dudit levier, correspondant aux différentes positions de sélection de la boîte de vitesses, des moyens d'interdiction (7) empêchant le pivotement non intentionnel dudit levier dans certaines desdites positions et des moyens de supression (10, 11) intentionnelle de l'action d'interdiction, commandés depuis la poignée de manoeuvre dudit levier à l'encontre de l'action d'un ressort de rappel, caractérisé par le fait que le levier (1) est monté pivotant sur un secteur d'interdiction et d'encliquetage (2) fixé audit véhicule et portant sur sa périphérie des crans d'interdiction (7) et, sur deux côtés opposées, des crans d'encliquetage (13), que le levier présente une tige intérieure (8) montée coulissante suivant l'axe du levier de manière que l'extrémité libre de ladite tige se trouve en prise avec lesdits crans d'interdiction (7) sous l'action d'un ressort (9) et puisse être amenée hors de prise d'avec lesdits crans, à l'encontre de l'action dudit ressort, au moyen d'une gâchette (10) associée à la manette de manoeuvre (11) du levier, et que le levier porte deux éléments d'encliquetage élastique (14) disposés de part et d'autre dudit secteur et agissant depuis deux côtés opposés sur les crans d'encliquetage (13) dudit secteur.

2. Dispositif suivant la revendications 1, caractérisé par le fait que le levier (1) présente une forme tubulaire au-dessus dudit secteur (2) et est divisé, à la hauteur dudit secteur, en deux branches (4) situées sur les deux côtés opposés du secteur.

3. Dispositif suivant la revendication 2, caractérisé par le fait que chacun desdits éléments d'encliquetage (14) est monté sur l'une desdites deux branches (4) du levier.

4. Dispositif suivant l'une quelconque des revendications précédentes, caractérisé par le fait que chaque élément d'encliquetage (14) comprend une bille (16) et un ressort (17) enfermés dans une capsule (15) susceptible d'être fixée, en tant que telle, au levier.

5. Dispositif suivant la revendication 4, caractérisé par le fait que chacune desdites capsules (15) est fixée par clipsage dans un trou (18) d'une desdites branches (4) du levier.

6. Dispositif suivant l'une quelconque des revendications précédentes, caractérisé par le fait que le sous-ensemble comprenant ledit secteur (2), ledit levier (1), ladite tige d'interdiction (8) et lesdits éléments d'encliquetage (14) est monté par ledit secteur (2) sur un sous-ensemble de support (20) relié au véhicule.

## Patentansprüche

1. Schalteinrichtung für automatische Getriebe von Kraftfahrzeugen, mit einem Schalthebel (1), der derart angeordnet ist, daß er in einer Fahrzeugebene verschwenkbar ist, z.B. auf dessen Boden, mit einer elastischen Verriegelungsanordnung (13), um mehrere Schwenkstellungen des Hebels festzulegen, die den verschiedenen Wählstellungen des Getriebes entsprechen, mit einer Sperranordnung (7), die das ungewollte Verschwenken des Hebels in einige der Wählstellungen verhindert und mit einer Anordnung (10, 11) zur gewollten Überwindung der Sperrwirkung, die vom Schaltknopf des Hebels aus gegen die Wirkung einer Rückholfeder betätigbar ist, dadurch gekennzeichnet, daß der Hebel (1) schwenkbar an einem Sperr- und Verriegelungsabschnitt (2) angeordnet ist, der am Fahrzeug befestigt ist und an seinem Umfang Sperrkerben (7) trägt, sowie an zwei sich gegenüberliegenden Seiten Verriegelungskerben (13) trägt, daß der Hebel einen unteren Stab (8) aufweist, der entlang der Hebelachse derart gleiten kann, daß das freie Ende des Stabes unter der Wirkung einer Feder (9) in die Sperrkerben (7) eingreift und aus einem Eingriff gelöst werden kann, gegen die Wirkung der Feder, mittels eines Drückers (10) am Schaltknopf (11) under daß der Hebel zwei elastische Verriegelungsteile (14) aufweist, die beiderseits des genannten Abschnitts vorgesehen sind und von zwei sich gegenüberliegenden Seiten aus auf die Verriegelungskerben (13) dieses Abschnitts wirken.

2. Einrichtung nach Anspruch 1, dadurch gekennzeichnet, daß der Hebel (1) oberhalb des Abschnitts (2) rohrförmig ist und auf Höhe dieses Abschnitts in zwei Teile (4) unterteilt ist, die sich entlang der beiden sich gegenüberliegenden Seiten des Abschnitts erstrecken.

3. Einrichtung nach Anspruch 2, dadurch gekennzeichnet, daß jedes der Verriegelungsteile (14) an einer der beiden Teile (4) des Hebels angeordnet ist.

4. Einrichtung nach einem der vorhergehenden Ansprüche, dadurch gekennzeichnet, daß jedes Verriegelungsteil (14) eine Kugel (16) und eine Feder (17) aufweist, die in einem Gehäuse (15) eingeschlossen sind und je eines auf einer Seite des Hebels befestigt ist.

5. Einrichtung nach Anspruch 4, dadurch gekennzeichnet, daß jedes Gehäuse (15) durch Einklemmen in eine Öffnung (18) eines der Teile (4) des Hebels befestigt ist.

6. Einrichtung nach einem der vorhergehenden Ansprüche, dadurch gekennzeichnet, daß die Untereinheit, die den Abschnitt (2), den Hebel (1), den Sperrstab (8) und die Verriegelungsteile (14) aufweist, mittels des Abschnitts (2) auf einer mit dem Fahrzeug verbundenen Träger-Untereinheit (20) angeordnet ist.

## Claims

1. An automatic motor vehicle gearbox control arrangement comprising a control lever (1) which is mounted in such a way that it is pivotable in a plane on the vehicle, for example on the floor of the vehicle, elastic ratchet means (13) for defining a plurality of pivotal positions of said lever corresponding to the different gearbox selection positions, prevention means (7) for preventing unintentional pivotal movement of said lever in some of said positions and means (10, 11) for intentionally suppressing the prevention effect, said means being controlled from the operating handle of the lever against the force of a return spring, characterised in that the lever (1) is mounted pivotally on a prevention and ratchet sector (2) fixed to said vehicle and bearing on its periphery prevention teeth (7) and, on two opposite sides, ratchet teeth (13), that the lever has an internal rod (8) mounted slidably along the axis of the lever in such a way that the free end of said rod is engaged with said prevention teeth (7) under the force of a spring (9) and can be brought out of engagement with said teeth against the force of said spring by means of a trigger (10) associated with the operating handle (11) of the lever, and that the lever bears two elastic ratchet elements (14) disposed on respective sides of said sector and acting from two opposite sides on the ratchet teeth (13) of said sector.

2. An arrangement according to claim 1 characterised in that the lever (1) is of a tubular shape above said sector (2) and is divided, at the height of said sector, into two limbs (4) which are disposed on the two opposite sides of the sector.

3. An arrangement according to claim 2 characterised in that each of said ratchet elements (14) is mounted on one of said two limbs (4) of the lever.

4. An arrangement according to any one of the preceding claims characterised in that each ratchet element (14) comprises a ball (16) and a spring (17) which are enclosed in a capsule (15) which is capable of being fixed as it is to the lever.

5. An arrangement according to claim 4 characterised in that each of said capsules (5) is fixed by a clipping action into a hole (18) in one of said limbs (4) of the lever.

6. An arrangement according to any one of the preceding claims characterised in that the sub-assembly comprising said sector (2), said lever (1), said prevention rod (8) and said ratchet elements (14) is mounted by means of said sector (2) on a support sub-assembly (20) which is connected to the vehicle.

FIG.1

## FIG.2